**Europäisches Patentamt**

**European Patent Office**

**Office européen des brevets**

(19)

(11) Numéro de publication: **0 219 396**
**B1**

(12)      **FASCICULE DE BREVET EUROPEEN**

(45) Date de publication du fascicule du brevet:
**11.04.90**

(21) Numéro de dépôt: **86402050.8**

(22) Date de dépôt: **18.09.86**

(51) Int. Cl.⁴: **B60T 13/24**

(54) **Servomoteur pneumatique d'assistance au freinage.**

(30) Priorité: **30.09.85 FR 8514452**

(43) Date de publication de la demande:
**22.04.87 Bulletin 87/17**

(45) Mention de la délivrance du brevet:
**11.04.90 Bulletin 90/15**

(84) Etats contractants désignés:
**DE GB IT**

(56) Documents cités:
**FR-A- 2 561 599**
**GB-A- 2 084 274**

(73) Titulaire: **BENDIX France, 126, rue de Stalingrad,
F-93700 Drancy(FR)**

(72) Inventeur: **Thioux, Alain, 9 Allée des Bordes,
F-94430 Chennevières(FR)**
Inventeur: **Carre, Jean-Jacques, 59, Bv. de l'Est,
F-93340 Le Raincy(FR)**

(74) Mandataire: **Lejet, Christian et al, BENDIX FRANCE
Division Technique Service Brevets Bendix
Europe 126 rue de Stalingrad, F-93700 Drancy(FR)**

## Description

La présente invention concerne les servomoteurs pneumatiques d'assistance au freinage pour véhicules, du type comprenant, dans un boîtier, un moyen de piston d'assistance sollicité axialement par un ressort de rappel de piston et comprenant une partie de moyeu arrière dans laquelle sont disposés un moyen de valve élastique et un plongeur de valve couplé à une tige d'actionnement du servomoteur, destinée typiquement à être reliée à une pédale de frein de véhicule, sollicitée axialement par un ressort de rappel de tige coaxial à cette dernière, une clé de retenue montée dans la partie du moyeu arrière et coopérant sélectivement avec le plongeur de valve, et un organe d'arrêt solidaire du boîtier et formant butée de retour pour un organe de butée solidaire de la tige d'actionnement.

Un servomoteur de ce type est décrit dans le document JP-U-35,661/78. Dans ce document, l'organe d'arrêt est constitué par une plaque annulaire solidaire d'un capot cylindrique rapporté sur le boîtier et coopérant avec un épaulement formé d'une seule pièce avec la tige d'actionnement. Outre que cet agencement ne permet pas de régler avec précision la course morte d'actionnement, il ne permet pas non plus de remplir les exigences imposées par certains constructeurs de véhicules automobiles et incluant notamment un test dit "d'arrachement" au cours duquel un effort de traction très important (de l'ordre de 500 daN) est exercé sur la tige d'actionnement.

La présente invention a pour objet de proposer un servomoteur du type sus-mentionné, de fabrication robuste et de faibles coûts de fabrication convenant à une industrialisation en grande série, satisfaisant aux tests les plus sévères.

Pour ce faire, selon l'invention, l'organe d'arrêt comporte une structure déformable susceptible de s'effacer élastiquement lorsqu'un effort exercé axialement par l'organe de butée sur l'organe d'arrêt dépasse une valeur prédéterminée.

Selon une autre caractéristique de l'invention, l'organe de butée est solidarisé, typiquement serti, après préassemblage du servomoteur, dans une position déterminée à une chape d'accouplement de la tige d'entrée à la pédale de frein.

Avec un tel agencement, l'organe d'arrêt assure, dans les conditions normales de fonctionnement ou lors de tests peu sévères, par exemple pour le réglage du contact de stop, sa fonction de retenue en butée de l'organe de butée pour limiter la course morte d'actionnement, laquelle peut être en outre réglée de façon fine de par le mode de solidarisation entre l'organe de butée et la tige d'actionnement, l'organe d'arrêt étant toutefois susceptible de s'effacer élastiquement lors des tests d'arrachement, en évitant ainsi d'être endommagé ou de prévoir un sur-dimensionnement abusif de l'organe d'arrêt, lequel recouvre ensuite, pour la durée de vie du servomoteur, la configuration relative requise vis-à-vis de l'organe de butée.

D'autres caractéristiques et avantages de la présente invention ressortiront de la description suivante d'un mode de réalisation, donné à titre illustratif mais nullement limitatif, faite en relation avec les dessins annexés, sur lesquels :

La figure 1 est une vue en coupe longitudinale partielle, suivant les plans de coupe I-I de la figure 2, de la partie arrière d'un servomoteur pneumatique d'assistance selon l'invention;

La figure 2 est une vue de l'arrière de la partie centrale du servomoteur de la figure 1;

La figure 3 illustre schématiquement le procédé de solidarisation par sertissage de la cheminée de boîtier avec l'organe d'arrêt;

La figure 4 illustre schématiquement la solidarisation dans la position requise de l'organe de butée sur la chape de la tige d'actionnement; et

La figure 5 est une vue en plan illustrant le mode d'effacement de l'organe d'arrêt du servomoteur selon l'invention.

Dans la description qui va suivre, les désignations "avant" et "arrière" se réfèrent à l'orientation usuelle d'un servomoteur installé dans un véhicule.

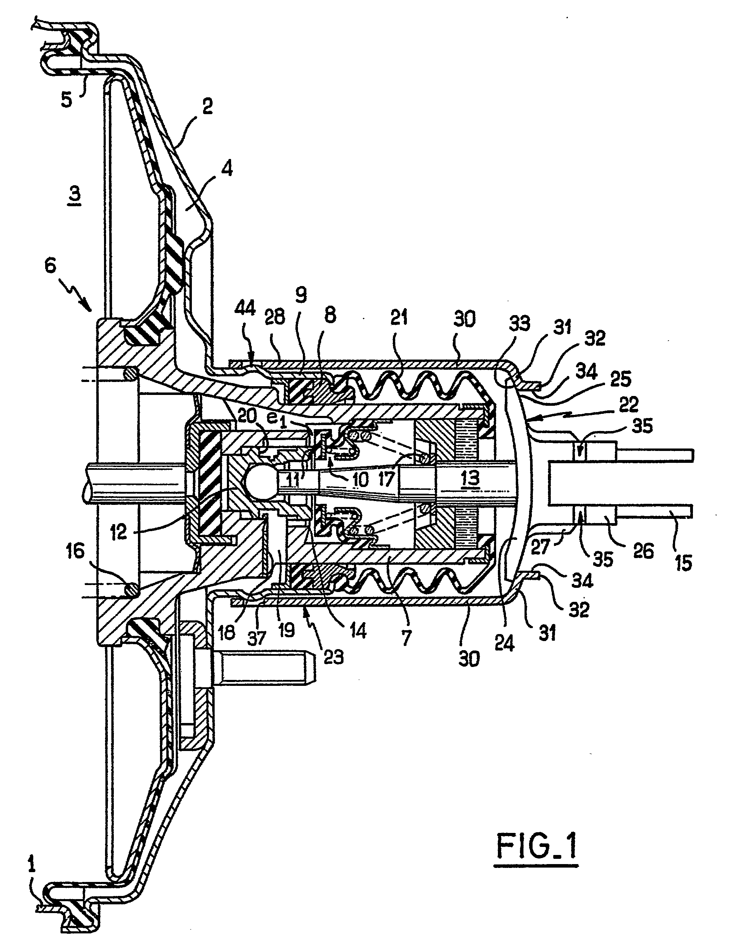

Sur la figure 1, on reconnaît un servomoteur pneumatique d'assistance au freinage du type comprenant un boîtier constitué de l'assemblage périphérique d'une coquille de boîtier avant 1 et d'une coquille de boîtier arrière 2, le boîtier étant divisé intérieurement en une chambre de dépression avant 3, destinée à être reliée en permanence à une source de vide dans un véhicule (non représentée), et une chambre de travail arrière 4 par un moyen de piston d'assistance constitué typiquement d'un diaphragme annulaire 5 monté centralement sur un moyeu de piston, désigné généralement par la référence 6 et comportant une partie de moyeu arrière tubulaire 7 guidée à coulissement étanche par un ensemble de guidage et d'étanchéité 8 dans une cheminée centrale arrière 9 formée typiquement d'une seule pièce avec la coquille de boîtier arrière 2. La communication sélective entre la chambre de travail arrière 4 et la chambre de dépression avant 3 ou avec l'atmosphère régnant dans la zone intérieure arrière de la partie de moyeu arrière 7 est réalisée par un moyen de valve élastique, désigné généralement par la référence 10, monté dans la partie du moyeu arrière 7 et coopérant sélectivement avec un premier siège de clapet 11 formé à l'extrémité arrière d'un plongeur de valve 12 monté coulissant dans un alésage central du moyeu 6 et couplé à la tige d'actionnement 13 du servomoteur, et avec un second siège de clapet 14 formé dans le moyeu 6 concentriquement autour du plongeur de valve 12. La tige d'entrée 13 a son extrémité arrière solidarisée typiquement à une chape en U 15 d'accouplement à une pédale de frein de véhicule (non représentée). Le moyen de piston 5, 6 est sollicité axialement dans la direction vers la coquille de boîtier arrière 2 par un ressort de rappel de piston 16 disposé dans la chambre de dépression avant 3 et la tige d'actionnement 13 est sollicitée axialement vers l'arrière par un ressort de rappel de tige 17 prenant appui dans la partie de moyeu arrière 7 (typiquement sur le support de clapet du moyen de valve 10) et sur un épaulement ou une collerette rapportée sur la tige d'actionnement 13. La possibilité de recul du plongeur 12 relativement au moyeu 6, après une phase de freinage (c'est-à-dire lorsque le moyen de piston 5, 6 s'est déplacé vers l'avant), déterminant la sur-ouverture au retour du moyen de valve élastique 10 à l'écart du second siège 14, est limitée par une clé d'arrêt 18 montée dans un évidement radial 19 formé dans le moyeu 6 (et formant passage d'air vers la chambre de travail arrière 4) et s'étendant dans l'alésage central du moyeu où coulisse le plongeur 12 pour coopérer sélectivement avec un épaulement périphérique 20 du plongeur 12. La surface de coulissement externe de la partie de moyeu arrière 7 est typiquement protégée par un soufflet 21 monté entre l'extrémité arrière de cette partie du moyeu arrière 7 et l'extrémité arrière de la cheminée 9.

Conformément à l'invention, la position de repos du plongeur 12 vis-à-vis du moyeu 6 (en butée, dans cette position de repos, comme représenté sur la figure 1, contre la coquille de boîtier arrière 2), et, partant, le jeu de course morte $e_1$ entre la face avant du moyen de valve élastique 10 (sollicité vers l'arrière par le plongeur 12) et le second siège de clapet 14, est déterminée au moyen d'un organe de butée 22 monté sur la tige d'actionnement 13 et coopérant avec un organe d'arrêt stationnaire, désigné généralement par la référence 23, solidaire du boîtier, typiquement de la coquille arrière de boîtier 2.

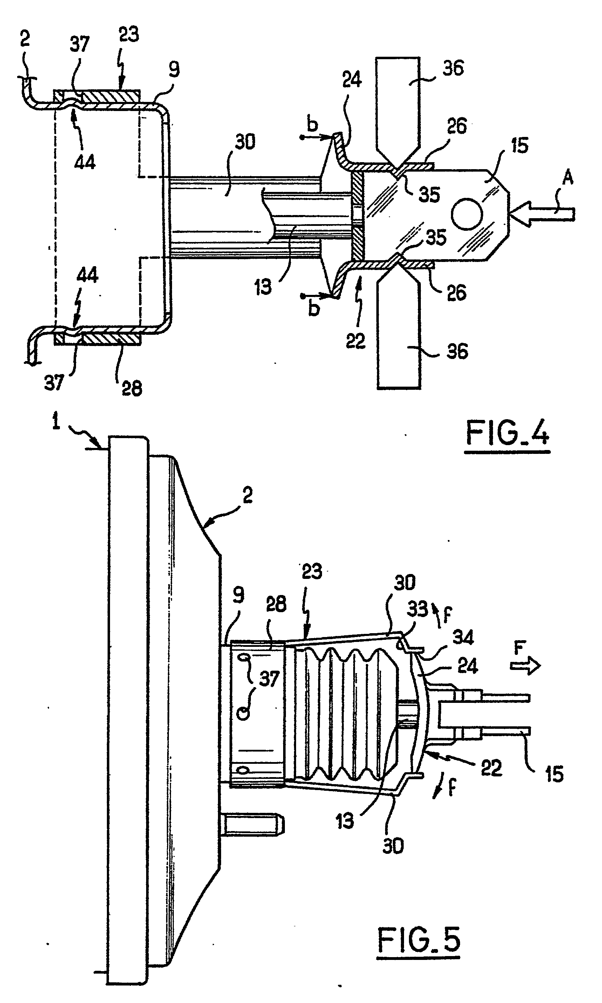

Conformément à l'invention, l'organe de butée réalisé en métal, comporte une partie de collerette 24, s'étendant sensiblement radialement vers l'extérieur et présentant une surface arrière sensiblement sphérique 25 centrée sur le centre de la rotule d'accouplement de la tige 13 au plongeur 12, et une embase de montage prismatique 26 emmanchée sur la chape en U 15 et avantageusement renforcée par des nervures de raidissement 27. Dans le mode de réalisation représenté, l'organe d'arrêt 23, réalisé en tôle métallique, comporte une virole annulaire de montage 28, emmanchée sur la cheminée 9 et solidarisée à cette dernière, et deux bras longitudinaux diamétralement opposés 30 s'étendant normalement parallèlement axialement vers l'arrière et comportant chacun, au voisinage de leur extrémité arrière, une partie rabattue radialement vers l'intérieur et vers l'arrière 31, elle-même prolongée vers l'arrière par une patte s'étendant sensiblement axialement 32. Comme on le voit bien sur la figure 1, on comprend que les parties s'étendant vers l'intérieur 31 des extrémités des bras 30 présentent une surface interne 33 s'interposant sur le trajet axial de la périphérie de la collerette 24 de l'organe de butée 22 en formant ainsi avec la face arrière convexe 25 de la collerette 24 des surfaces d'appui coopérantes inclinées vers l'arrière par rapport à l'axe de la tige d'actionnement 13. De ce fait, quoique assurant normalement une retenue en butée précise de l'organe de butée 22 (et, partant, de la tige d'actionnement 13 et du plongeur 12), si un effort de traction important, tel que figuré par la flèche F sur la figure 5, est exercé sur la chape 15, le profil légèrement fuyant des surfaces d'appui 25 et 33 permet à la périphérie de la collerette 24 de glisser relativement à la face d'appui 33 en provoquant une flexion élastique en écartement vers l'extérieur, figurée par les flèches f sur la figure 5, des bras 30. Si l'effort momentané F est très important, comme lors des tests d'arrachement, cette flexion vers l'extérieur des bras 30 amène la périphérie de la collerette 24 à venir s'engager entre les surfaces de guidage et de maintien en vis-à-vis 34 des pattes d'extrémité 32 des bras 30 en maintenant derechef ces derniers dans leur position écartée maximum. Lors de cette phase d'échappement, le recul de l'ensemble tige 13/plongeur 12 est limité par venue en butée de l'épaulement 20 du plongeur 12 contre la clé d'arrêt 18, elle-même maintenue stationnaire du fait de la position préalablement en butée du moyeu 6 contre la coquille arrière du boîtier 2. La longueur axiale des pattes d'extrémité 32 est déterminée de façon qu'en position de recul maximum de l'organe de butée 22 la périphérie de la collerette 24 n'échappe pas au-delà des extrémités libres des pattes. Une fois le test d'arrachement terminé, la tige 13 est ramenée vers l'avant vers sa position normale de repos, la collerette 24 repassant axialement au niveau des surfaces d'appui 33 des bras 30 qui recouvrent alors élastiquement leur position normale en maintenant ainsi l'ensemble organe de butée 22/tige 13/plongeur 12 dans la position de repos requise.

Conformément à l'invention, cette position requise de repos est ajustée précisément en solidarisant à la chape 15 l'organe de butée 22 dans une position déterminée adéquate. Durant l'assemblage du servomoteur, l'organe de butée 22 est positionné librement sur la chape 15. A ce stade, compte tenu des observations suivant lesquelles, du fait des chaînes des tolérances, la course morte usuelle du moyen de valve est comprise entre 1,1 et 1,35 millimètres environ, on fait avancer, relativement au moyeu 6 maintenu en butée contre la coquille arrière de boîtier 2 par le ressort de piston 16, la tige 13 d'une distance déterminée, typiquement de 1 mm, comme figuré par la flèche A sur la figure 4, pour assurer ainsi un jeu de course morte $e_1$ inférieur à 0,4 mm. Dans cette position ainsi avancée de la tige 13 on sollicite l'organe de butée 22 vers l'arrière contre les faces d'appui 33 des bras 30, comme figuré par les flèches b sur la figure 4, et l'on solidarise alors l'embase prismatique 26 à la chape 15 en sertissant les parois en U correspondantes de l'embase 26 dans des échancrures 35 prévues dans les arêtes de la chape 15 au moyen de couteaux 36, après quoi l'ensemble tige 13/plongeur 12 conserve ainsi la position "avancée" relative, garantissant le jeu de course morte réduit $e_1$ sus-mentionné.

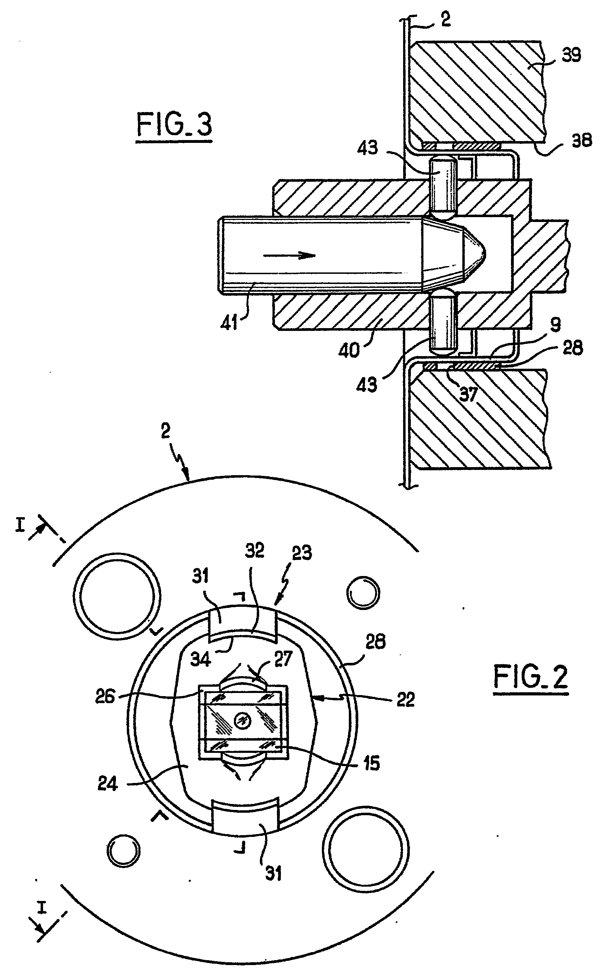

Comme on le voit bien sur les figures 3 et 4, dans un mode de réalisation préféré de l'invention, la virole annulaire de montage 28 de l'organe d'arrêt 23 comporte une série d'orifices angulairement répartis 37. Avant l'assemblage du servomoteur on insère la cheminée 9 avec la virolle 28 emmanchée sur cette dernière dans un alésage aux dimensions correspondantes 38 d'un outillage 39 dans lequel est introduit et positionné un mandrin creux 40 comportant un plongeur 41 présentant, à l'avant, une rampe cônique 42 susceptible de solliciter radialement vers l'extérieur des pions de sertissage 43 pour refouler dans les orifices 37 le matériau de la paroi de la cheminée 9, comme figuré en 44, et solidariser ainsi fermement, dans la position requise, l'organe d'arrêt 23 à la cheminée 9.

## Revendications

1. Servomoteur pneumatique d'assistance au freinage pour véhicule, comprenant, dans un boîtier (1, 2), un moyen de piston d'assistance (5, 6) sollicité axialement par un ressort de rappel de piston (16) et comprenant une partie de moyeu arrière (7) dans laquelle sont disposés un moyen de valve élastique (10) et un plongeur de valve (12) couplé à une tige d'actionnement (13) du servomoteur sollicitée axialement par un ressort de rappel de tige (17) coaxial à cette dernière, une clé de retenue (18) montée dans la partie de moyeu arrière (7) et coopérant sélectivement avec le plongeur de valve (12), et un organe d'arrêt (23) solidaire du boîtier (1, 2) et formant butée de retour (31) pour un organe de butée (22) solidaire de la tige d'actionnement (13), caractérisé en ce que l'organe d'arrêt (23) comporte une structure déformable (30) susceptible de s'effacer élastiquement lorsqu'un effort exercé axialement par l'organe de butée (22) sur l'organe d'arrêt (23) dépasse une valeur prédéterminée.

2. Servomoteur selon la revendication 1, caractérisé en ce que l'organe de butée (22) et l'organe d'arrêt (23) présentent des surfaces d'appui coopérantes (25, 33), inclinées vers l'arrière par rapport à l'axe de la tige d'actionnement (13).

3. Servomoteur selon la revendication 2, caractérisé en ce que la surface d'appui (33) de l'organe d'arrêt (23) est formée par l'extrémité arrière d'au moins un bras longitudinal (30) ayant une extrémité avant solidarisée au boîtier (1, 2).

4. Servomoteur selon la revendication 3, caractérisé en ce que le bras (30) est formé d'une seule pièce avec une virole de montage annulaire (28) solidarisée à une cheminée centrale arrière (9) du boîtier (1, 2).

5. Servomoteur selon la revendication 4, caractérisé en ce que la virole de montage (28) et la cheminée (9) sont solidarisées l'une à l'autre par sertissage (44).

6. Servomoteur selon l'une des revendications 3 à 5, caractérisé en ce que la surface d'appui (33) de l'organe d'arrêt (23) est prolongée vers l'arrière par une surface de guidage sensiblement axiale (34).

7. Servomoteur selon l'une des revendications précédentes, caractérisé en ce que l'organe de butée (22) est solidarisé, dans une position déterminée, à une chape en U (15) d'accouplement de la tige d'actionnement (13).

8. Servomoteur selon la revendication 7, caractérisé en ce que l'organe de butée (22) comporte une partie de collerette (24) et une embase prismatique (26) emmanchée sur la chape (15).

9. Servomoteur selon la revendication 8, caractérisé en ce que l'embase prismatique (26) est sertie en position dans des échancrures (35) des arêtes de la chape (15).

## Claims

1. Pneumatic brake booster for a vehicle, comprising, inside a housing (1, 2), a booster piston (5, 6) axially biased by a piston return spring (16) and comprising a rear hub part (7) inside which there are arranged a resilient valve means (10) and a valve plunger (12) coupled to a booster actuating rod (13) axially biased by a rod return spring (17) coaxial with said rod, a retaining key (18) mounted in the said rear hub part (7) and co-operating selectively with said valve plunger (12), and a stop member (23) secured to said housing (1, 2) and forming a return abutment (31) for an abutting member (22) integral with said actuating rod (13), characterized in that said stop member (23) has a deformable structure (30) capable of yielding elastically when a force exerted axially by said abutting member (22) on said stop member (23) exceeds a predetermined value.

2. Booster according to Claim 1, characterized in that said abutting member (22) and said stop member (23) have co-operating bearing surfaces (25, 33) which are inclined towards the rear in relation to the axis of said actuating rod (13).

3. Booster according to Claim 2, characterized in that said bearing surface (33) of said stop member (23) is formed by the rear end of at least one longitudinal arm (30) having a front end rigidly fixed to said housing (1, 2).

4. Booster according to Claim 3, characterized in that said arm (30) is formed as a single piece with an annular mounting sleeve (28) rigidly fixed to a rear central duct (9) of said housing (1, 2).

5. Booster according to Claim 4, characterized in that said mounting sleeve (28) and said duct (9) are rigidly fixed to each other by crimping (44).

6. Booster according to any of Claims 3 to 5, characterized in that said bearing surface (33) of said stop member (23) is extended towards the rear by a substantially axial guiding surface (34).

7. Booster according to any of the preceding claims, characterized in that said abutting member (22) is rigidly fixed, in a given position, to a U-shaped coupling fork (15) secured to the said actuating rod (13).

8. Booster according to Claim 7, characterized in that said abutting member (22) has a collar part (24) and a prismatic base (26) fitted onto said fork (15).

9. Booster according to Claim 8, characterized in that said prismatic base (26) is crimped in position in notches (35) provided on edges of said fork (15).

## Patentansprüche

1. Pneumatischer Bremskraftverstärker für Fahrzeuge, der in einem Gehäuse (1, 2) eine Hilfskolbeneinrichtung (5, 6) umfaßt, die durch eine Kolben-Rückholfeder (16) axial beaufschlagt ist und einen hinteren Nabenteil (7) aufweist, in welchem eine elastische Ventileinrichtung (10) sowie ein Tauchkolbenventil (12) angeordnet sind, das an eine Betätigungsstange (13) des Bremskraftverstärkers angekoppelt ist, welche durch eine Stangen-Rückholfeder (17) axial beaufschlagt ist, welche zu dieser koaxial ist; einen Rückhalteschlüssel (18) umfaßt, der in dem hinteren Nabenteil (7) angebracht und mit dem Tauchkolbenventil (12) selektiv zusammenwirkt; und ein mit dem Gehäuse (1, 2) fest verbundenes Halteorgan (23) umfaßt, das einen Rückanschlag (31) für ein Anschlagsorgan (22), das mit der Betätigungsstange (13) fest verbunden ist; bildet, dadurch gekennzeichnet, daß das Halteorgan (23) eine verformbare Struktur (30) umfaßt, die elastisch ausweichen kann, wenn eine durch das Anschlagsorgan (22) auf dem Halteorgan (23) axial ausgeübte Beanspruchung einen vorbestimmten Wert überschreitet.

2. Bremskraftverstärker nach Anspruch 1, dadurch gekennzeichnet, daß das Anschlagsorgan (22) sowie das Halteorgan (23) zusammenwirkende Abstützflächen (25, 33) aufweisen, welche in bezug auf die Achse der Betätigungsstange (13) nach hinten geneigt sind.

3. Bremskraftverstärker nach Anspruch 2, dadurch gekennzeichnet, daß die Abstützfläche (33) des Halteorgans (23) aus dem hinteren Endteil wenigstens eines Längsarms (30) gebildet ist, der einen mit dem Gehäuse (1, 2) fest verbunden vorderen Endteil aufweist.

4. Bremskraftverstärker nach Anspruch 3, dadurch gekennzeichnet, daß der Arm (30) einstückig mit einem ringförmigen Montagering (28) ausgebildet ist, der mit einem hinteren zentralen Schacht (9) des Gehäuses (1, 2) fest verbunden ist.

5. Bremskraftverstärker nach Anspruch 4, dadurch gekennzeichnet, daß der Montagering (28) sowie der Schacht (9) durch Verstemmen (44) miteinander fest verbunden sind.

6. Bremskraftverstärker nach einem der Ansprüche 3 bis 5, dadurch gekennzeichnet, daß die Abstützfläche (33) des Halteorgans (23) nach hinten hin durch eine im wesentlichen axiale Führungsfläche (34) verlängert ist.

7. Bremskraftverstärker nach einem der vorstehenden Ansprüche, dadurch gekennzeichnet, daß das Anschlagsorgan (22) in einer bestimmten Position mit einer U-förmigen Kappe (15) zur Ankoppelung an die Betätigungsstange (13) fest verbunden ist.

8. Bremskraftverstärker nach Anspruch 7, dadurch gekennzeichnet, daß das Anschlagsorgan (22) einen Kragenteil (24) sowie einen prismatischen Sockel (26), der in die Kappe (15) eingepreßt ist, umfaßt.

9. Bremskraftverstärker nach Anspruch 8, dadurch gekennzeichnet, daß der prismatische Sockel (26) fest in Einkerbungen (35) der Kanten der Kappe (15) verstemmt ist.

FIG_1

FIG.3

FIG.2

FIG.4

FIG.5